# DEMANDE DE BREVET EUROPEEN

(11) **EP 2 413 471 A2**
(43) Date de publication de la demande: **01.02.2012**
(21) Numéro de dépôt: 11305689.9
(22) Date de dépôt: 06.06.2011
(51) Int. Cl.: H02J 7/02, B60L 11/18, H02M 1/14, H02M 7/00, H02M 7/797

(54) **Dispositif de charge de moyens d'accumulation**

(30) Priorité: 25.06.2010 FR 1055101
(71) Demandeur: Valeo Systèmes de Contrôle Moteur, 95800 Cergy Saint-Christophe (FR)
(72) Inventeur: De Sousa, Luis, 95670 Eragny Sur Oise (FR); Bouchez, Boris, 95800 Cergy Le Haut (FR)
(74) Mandataire: Cardon, Nicolas

(57) **Abrégé**

La présente invention concerne un dispositif électrique de charge de moyens d'accumulation (5), ledit dispositif électrique comportant :
- un moteur (6) à courant alternatif connecté à un réseau extérieur de tension (11),
- un onduleur (2) connecté aux phases dudit moteur (6), et
- des moyens de commutation (4) intégrés à l'onduleur (2), lesdits moyens de commutation (4) étant configurés pour autoriser l'alimentation dudit moteur (6) et pour autoriser la charge des moyens d'accumulation (5) par l'onduleur (2),

Selon l'invention, ledit dispositif électrique comporte en outre pour chaque phase dudit moteur (6) un filtre passe-bas RLC (18) connecté d'une part au point milieu (16) de la phase dudit moteur (6) et d'autre part à la masse.

## Description

La présente invention concerne un dispositif de charge et se situe dans le domaine des moteurs ou alternateurs alimentés par des batteries rechargeables. L'invention trouvera avantageusement application dans le domaine des automobiles électriques dans lesquelles les batteries peuvent alimenter le moteur via un onduleur et être rechargées lorsque l'automobile est à l'arrêt.

Toutefois, bien que particulièrement prévus pour une telle application le dispositif et le procédé associé pourront être utilisés dans d'autres domaines et notamment dans des dispositifs de génération d'énergie de type éolien ou hydraulique.

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule.

De manière à assurer la recharge de ces batteries haute tension il est connu d'équiper le véhicule d'un dispositif de charge intégré au véhicule électrique comprenant un convertisseur contrôleur de puissance sans pont de diode également connu sous le nom de « Bridgeless PFC ».

Des courants de mode commun générés par le découpage du convertisseur circulent dans les capacités parasites que présente l'électronique par rapport au châssis, ou le moteur par rapport au châssis ou bien encore la batterie par rapport aux châssis. Ces courants se rebouclent par le châssis, le fil de terre relié au neutre du réseau électrique. Le chargeur émet donc des perturbations sur le réseau électrique. Des normes limitent l'émission de perturbations hautes fréquences sur le réseau électrique.

Des solutions de filtrage passif peuvent aider à résoudre le problème. Il s'agît par exemple de mettre un filtre de mode commun sur l'entrée du chargeur. Ainsi, les courants de mode commun se rebouclent par le filtre au lieu d'aller sur le réseau. Néanmoins, l'inconvénient des filtres hormis le coût et le volume et qu'il vont générer des courants de fuite basse fréquences (de l'ordre de 50Hz/60hz) entre le secteur et la terre.

L'invention a donc pour objectif de pallier ces inconvénients de l'art antérieur en proposant un dispositif de charge permettant de réduire les perturbations hautes fréquences sur le réseau électrique.

À cet effet, l'invention a pour objet un dispositif électrique de charge de moyens d'accumulation, ledit dispositif électrique comportant :
- un moteur à courant alternatif connecté à un réseau extérieur de tension,
- un onduleur connecté aux phases dudit moteur, et
- des moyens de commutation intégrés à l'onduleur, lesdits moyens de commutation étant configurés pour autoriser l'alimentation dudit moteur et pour autoriser la charge des moyens d'accumulation par l'onduleur,
caractérisé en ce que ledit dispositif électrique comporte en outre pour chaque phase dudit moteur un filtre passe-bas RLC connecté au point milieu de la phase dudit moteur, à la masse, ainsi qu'à une phase du réseau extérieur de tension.

Chaque filtre passe-bas RLC peut comporter trois bornes, respectivement reliées au point milieu de la phase dudit moteur, à la masse et à une phase du réseau extérieur de tension.

Un tel filtre passif permet d'atténuer les perturbations hautes fréquences sans générer de courants de fuite entre le secteur et la terre.

Ledit dispositif de charge peut comporter en outre une ou plusieurs des caractéristiques suivantes, seules ou en combinaison :
- le filtre passe-bas RLC comporte :
   ● une inductance connectée au point milieu de ladite phase dudit moteur par une première extrémité, et dont la deuxième extrémité est connectée à une phase du réseau extérieur de tension, la première et la deuxième extrémité de l'inductance forment notamment deux bornes du filtre passe-bas RLC
   ● un condensateur dont une première extrémité est connectée à la première extrémité de l'inductance, et
   ● une résistance dont une première extrémité est reliée à la deuxième extrémité du condensateur et dont une deuxième extrémité est reliée à la masse, ladite deuxième extrémité de la résistance pouvant alors former la troisième borne du filtre passe-bas RLC,
- les moyens de commutation comprennent une structure de pont en H pour chaque phase du moteur, telle que chaque structure de pont en H comporte deux bras de commutation comprenant respectivement deux commutateurs, la phase associée dudit moteur étant connectée entre les quatre commutateurs des deux bras de commutation,
- les moyens de commutation comportent respectivement au moins un transistor et au moins une diode en parallèle,
- ledit dispositif comporte un convertisseur DC/DC entre les moyens de commutation et les moyens d'accumulation,
- ledit moteur est un moteur triphasé,
- ledit dispositif comporte un circuit de commande configuré pour commander les moyens de commutation de manière à passer d'un mode d'alimentation dudit moteur à un mode de charge des moyens d'accumulation et inversement,
- le circuit de commande est configuré pour transmettre un signal de commande de modulation par largeur d'impulsion PWM.

En variante de ce qui vient d'être décrit, l'inductance peut être connectée au point milieu de ladite phase dudit moteur par une première extrémité et la deuxième extrémité de l'inductance peut être connectée à une deuxième moitié de bobine dudit moteur, le condensateur et la résistance du filtre restant montés de la même manière que précédemment décrit.

D'autres caractéristiques et avantages de l'invention ressortiront de la description suivante, donnée à titre d'exemple, sans caractère limitatif, en regard des dessins annexés sur lesquels :
- la figure 1 représente de manière schématique un dispositif de charge triphasé avec un réseau électrique triphasé pour un véhicule automobile,
- la figure 2 est une vue plus en détail d'une partie du dispositif de charge de la figure 1, et
- la figure 3 illustre un filtre passe bas du dispositif de charge de la figure 1.

Sur ces figures et dans la suite de la description, les éléments identiques sont identifiés par les mêmes numéros de référence.

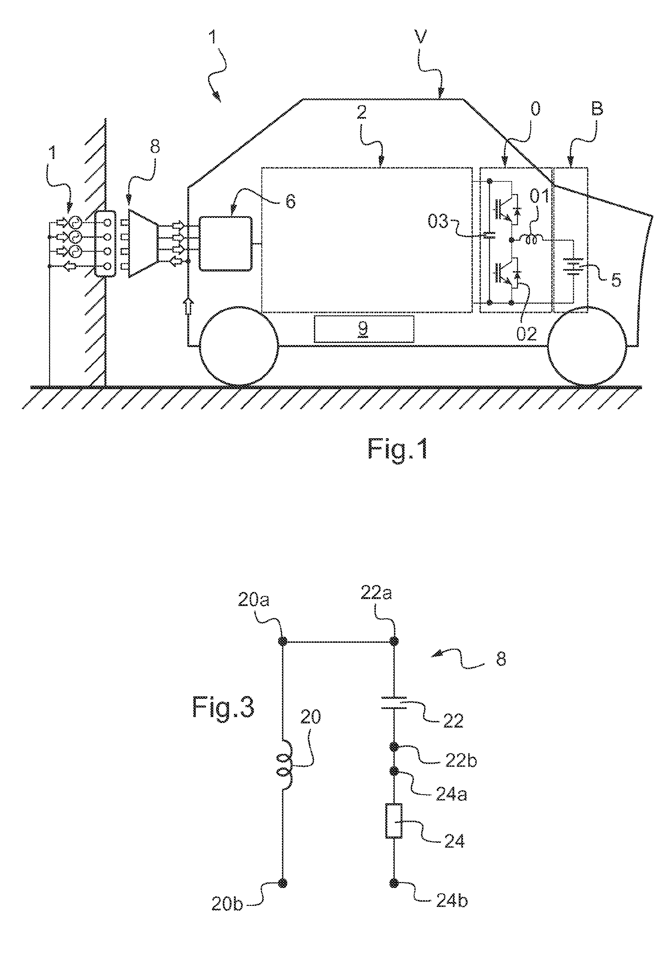

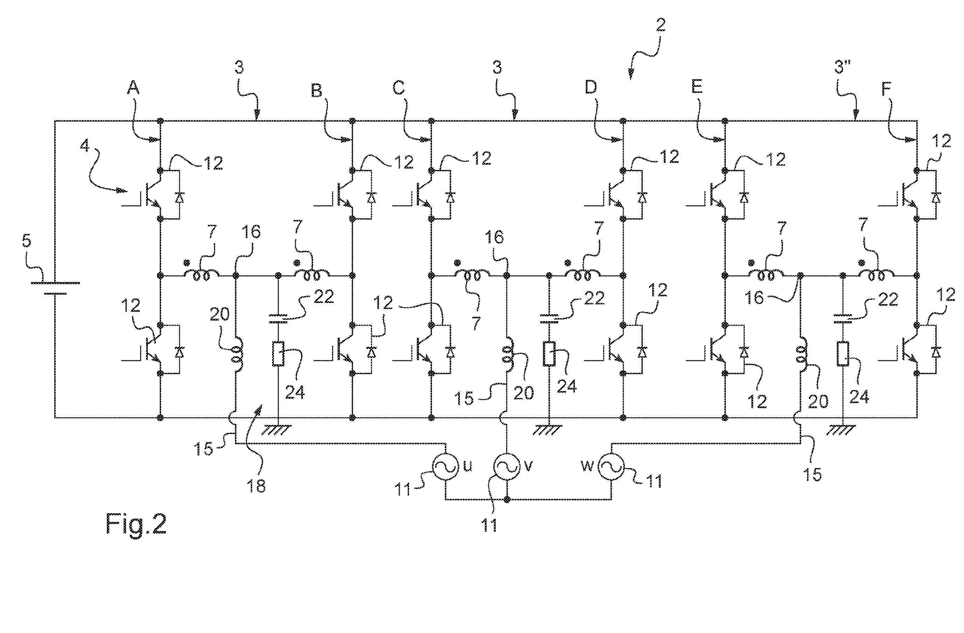

En se reportant aux figures 1 et 2, on voit représenté de façon schématique un dispositif 1 de charge d'une batterie B d'un véhicule automobile V par exemple hybride ou électrique selon un exemple de mise en oeuvre de l'invention.

Ce dispositif de charge 1 comporte dans l'exemple décrit:
- un onduleur 2 et des moyens de commutation 4 intégrés à l'onduleur 2 comportant trois ponts en H, 3,3',3",
- un moteur triphasé 6 à point milieu à courant alternatif, représenté partiellement, dont les bobines 7 font office d'inductance,
- une connectique 8, et
- un circuit de commande 9.

Le dispositif 1 peut comporter également un convertisseur DC/DC 10 disposé entre l'onduleur 2 et les moyens d'accumulation 5 de la batterie B.

Chaque pont en H 3,3',3" comporte quatre commutateurs 12 répartis sur les six bras référencés de A à F. Un avantage du pont en H par rapport au pont triphasé classique est que son utilisation double la tension appliquée aux phases du moteur 6 pour une même tension, de la sorte, bien que comportant un doublement du nombre de commutateurs 12, la surface de silicium utilisée sera identique pour le pont en H à celle du pont triphasé classique ; puisqu'en effet les courants de phase sont divisés par deux.

L'utilisation des ponts en H permet en outre de réduire les pertes dues aux commutations.

Chaque bras de commutation A à F comporte deux commutateurs 12; un premier commutateur 12 sur le haut du bras de commutation par rapport à la figure 2 et un deuxième commutateur 12 sur le bas du bras de commutation.

La connectique 8 permet le raccordement du moteur 6 à la prise d'un réseau 11 électrique triphasé. Par exemple, pour chaque phase du moteur 6, les bornes 15 du réseau électrique 11 sont reliés, via l'inductance 20, aux points milieux 16 des deux bobines 7 de la phase du moteur 6.

Par ailleurs, la connectique 8 peut comporter des moyens de verrouillage, non représentés dans les figures annexées, permettant d'empêcher l'accès à la prise électrique en cas de mise sous tension du dispositif 1. La connectique 8 peut être de plus associée à des seconds moyens de verrouillage (non représentés) empêchant à l'utilisateur l'accès aux conducteurs (qui sont alors sous tension) lors du mode d'alimentation.

Le circuit de commande 9 permet quant à lui de piloter les commutateurs 12. Sur les figures, la liaison entre le circuit de commande 9 et les commutateurs 12 n'a pas été représentée pour faciliter la compréhension des figures.

Dans l'exemple illustré, le dispositif de charge 1 est prévu pour fonctionner selon deux modes :
- un mode d'alimentation dans lequel il assure l'alimentation en courant alternatif du moteur 6, à partir de la batterie B, et
- un mode de charge dans lequel il assure la charge de la batterie B à partir du réseau électrique 11 relié à la terre, en employant les enroulements 7 du moteur 6 comme inductance.

Le passage du mode d'alimentation au mode de charge peut être géré par le circuit de commande 9.

À titre d'exemple, en mode d'alimentation, le circuit de commande 9 commande l'ensemble des bras A, B, C, D, E et F générant des courants triphasés de manière analogue à une commande standard. En mode de charge seuls les bras B, D et F sont commandés réalisant, avec les inductances 7 du moteur 6 de la machine électrique, un élévateur de tension.

Plus précisément, et dans le présent exemple, le circuit de commande 9 pilote les bras A à F de la manière suivante :
- en mode d'alimentation, chacun des ponts en H est commandé de sorte à permettre la circulation d'un courant alternatif dans la phase correspondante du moteur. Les courants alternatifs circulant dans les trois phases du moteur sont coordonnés de manière classique pour que le moteur tourne. Les interrupteurs 12 (qui sont dans le présent exemple des transistors de puissance) des branches A et B peuvent être pilotés selon une commande PWM (Pulse Width Modulation, en français : modulation à largeur d'impulsions) sinusoïdale classique. Les deux autres ponts en H sont pilotés de la même manière mais en déphasage les uns des autres, de préférence à 120° dans le cas d'un moteur triphasé ;
- en mode de charge triphasé, les deux interrupteurs de chacun des bras A, C et E sont ouverts, tandis que les interrupteurs des bras B, D et F sont pilotés selon une commande alternative classique pour un chargeur triphasé de sorte que chaque inductance 7 soit traversée par un courant alternatif et que la fonction PFC (Power Factor Correction, en français : correction de facteur de puissance) soit réalisée sur l'ensemble des phases.

Par ailleurs, en se référant à nouveau à la figure 1, l'utilisation d'un convertisseur DC/DC 10 disposé entre l'onduleur 2 et les moyens d'accumulation 5 permet d'adapter les tensions et par conséquent d'optimiser le dimensionnement de l'onduleur sans dégrader le rendement. En effet la tension des moyens d'accumulation 5 varie avec leurs charges, les variations allant du simple au double, l'utilisation d'un convertisseur DC/DC 10 permet de dimensionner l'onduleur 2 pour une tension plus basse, ce dernier devant laisser passer deux fois moins de courant.

À titre d'exemple, ce convertisseur 10 comporte une inductance 101 connectée aux moyens d'accumulation 5, deux commutateurs 102 dont le point milieu est relié à l'inductance 101, et un condensateur 103 connecté aux bornes des deux commutateurs 102.

En outre, comme on le remarque sur la figure 2, le dispositif de charge 1 comporte également pour chaque phase du moteur 6, un filtre passe-bas RLC 18 (mieux visible sur la figure 3) connecté d'une part au point milieu 16 et d'autre part à la masse.

Plus précisément, un filtre RLC 18 comporte :
- une inductance 20 connectée au point milieu 16, par sa première extrémité 20a, sa deuxième extrémité 20b étant connectée à une phase du réseau,
- un condensateur 22 dont une première extrémité 22a est connectée à la première extrémité 20a de l'inductance 20, et
- une résistance 24 dont une première extrémité 24a est reliée à la deuxième extrémité 22b du condensateur 22 et dont une deuxième extrémité 24b est reliée à la masse.

Ce filtre RLC est donc efficace pour réduire les perturbations hautes fréquences tout en permettant un petit dimensionnement des composants.

Bien entendu, le dispositif de charge 1 triphasé décrit ci-dessus est généralisable à un système polyphasé.

## Revendications

1. Dispositif électrique de charge de moyens d'accumulation (5), ledit dispositif électrique comportant :
- un moteur (6) à courant alternatif connecté à un réseau extérieur de tension (11),
- un onduleur (2) connecté aux phases dudit moteur (6), et
- des moyens de commutation (4) intégrés à l'onduleur (2), lesdits moyens de commutation (4) étant configurés pour autoriser l'alimentation dudit moteur (6) et pour autoriser la charge des moyens d'accumulation (5) par l'onduleur (2),
**caractérisé en ce que** ledit dispositif électrique comporte en outre pour chaque phase dudit moteur (6) un filtre passe-bas RLC (18) comportant trois bornes respectivement connectées au point milieu (16) de la phase dudit moteur (6), à la masse, ainsi qu'à une phase du réseau extérieur de tension.

2. Dispositif électrique selon la revendication 1, **caractérisé en ce que** le filtre passe-bas RLC (18) comporte :
- une inductance (20) connectée au point milieu (16) de ladite phase dudit moteur (6) par une première extrémité (20a), et dont la deuxième extrémité (20b) est connectée à une phase du réseau extérieur de tension,
- un condensateur (22) dont une première extrémité (22a) est connectée à la deuxième extrémité (20b) de l'inductance (20), et
- une résistance (24) dont une première extrémité (24a) est reliée à la deuxième extrémité (22b) du condensateur (22) et dont une deuxième extrémité (22b) est reliée à la masse.

3. Dispositif selon l'une des revendications 1 ou 2, **caractérisé en ce que** les moyens de commutation (4) comprennent une structure de pont en H (3,3',3") pour chaque phase du moteur (6), telle que chaque structure de pont en H (3,3',3 ") comporte deux bras de commutation (A,B,C,D,E,F) comprenant respectivement deux commutateurs (12), la phase associée dudit moteur (6) étant connectée entre les quatre commutateurs (12) des deux bras de commutation (A,B,C,D,E,F).

4. Dispositif électrique selon l'une quelconque des revendications précédentes, **caractérisé en ce que** les moyens de commutation (4) comportent respectivement au moins un transistor et au moins une diode en parallèle.

5. Dispositif électrique selon l'une quelconque des revendications précédentes, **caractérisé en ce qu'**il comporte un convertisseur DC/DC (10) entre les moyens de commutation (4) et les moyens d'accumulation (5).

6. Dispositif électrique selon l'une quelconque des revendications précédentes, **caractérisé en ce que** ledit moteur (6) est un moteur triphasé.

7. Dispositif selon l'une quelconque des revendications précédentes, **caractérisé en ce qu'**il comporte un circuit de commande (9) configuré pour commander les moyens de commutation (4) de manière à passer d'un mode d'alimentation dudit moteur (6) à un mode de charge des moyens d'accumulation (5) et inversement.

8. Dispositif électrique selon la revendication 7, **caractérisé en ce que** le circuit de commande (9) est configuré pour transmettre un signal de commande de modulation par largeur d'impulsion PWM.
